# EUROPEAN PATENT SPECIFICATION

(11) **EP 4 594 069 B1**
(45) Date of publication and mention of the grant of the patent: **12.08.2026**
(21) Application number: 23782875.1
(22) Date of filing: 28.09.2023
(51) Int. Cl.: B22D 17/04, B22D 17/10, B22D 17/20, B22D 17/22, B22D 17/24, B22D 17/32, B22D 46/00, B22F 3/22, B28B 1/24, B28B 7/00, B28B 13/02, B22F 5/00, C22C 29/02, B29C 45/00

(54) **A MOULDING TOOL ASSEMBLY AND A METHOD FOR POWDER INJECTION MOULDING A COMPONENT**
FORMWERKZEUGANORDNUNG UND VERFAHREN ZUM PULVER-SPRITZGIESSEN EINES BAUTEILS
ENSEMBLE D'OUTIL DE MOULAGE ET PROCÉDÉ DE MOULAGE PAR INJECTION DE POUDRE D'UN COMPOSANT

(30) Priority: 30.09.2022 EP 22198918
(43) Date of publication of application: 06.08.2025
(73) Proprietor: Seco Tools AB, 737 82 Fagersta (SE)
(72) Inventor: GRÖNQUIST, Mikael, 737 82 Fagersta (SE); JONSSON, Per, 737 82 Fagersta (SE); EKMAN, Martin, 737 82 Fagersta (SE); GRAVNINGSBRÅTEN, Jan, 737 82 Fagersta (SE); PETTERSSON, Håkan, 737 82 Fagersta (SE); NILSSON, Maria, 737 82 Fagersta (SE); LICHTERMAN, Max, 737 82 Fagersta (SE)
(74) Representative: Sandvik
(86) International application number: PCT/EP2023/076872
(87) International publication number: WO 2024/068829

(56) References cited:
- EP-A1- 3 150 303
- WO-A1-2010/096003
- JP-B2- 3 108 229
- US-A1- 2012 125 696
- US-A1- 2014 197 583
- US-B2- 11 339 654
- US-B2- 7 556 668

## Description

The present invention relates to a method for powder injection moulding a component and a moulding tool assembly therefore. The invention also relates to the component obtainable by the method.

### Background of the invention

Powder injection moulding (PIM) is a manufacturing technique in which a liquid compound of e.g. a polymeric binder, a metal carbide and a binder metal is injected into a mould cavity of a moulding tool assembly.

EP 3 150 303 A1 discloses a moulding tool for provision of components with a through hole which may be obtained during the moulding step substantially without subsequent machining steps. JP 3 108229 B2 discloses an injection compression mold for molding a disc comprising a die member, a bore, a sprue bushing, and a punch member.

A common problem when manufacturing components using PIM technique is formation of defective structures entrapping air present in the mould cavity which gives rise to inter alia weld lines and/or internal pores which eventually may result in cracks following sintering. Such problems have to some extent been solved by provision of air gaps in the cavity through which air present in the cavity is released. Still, problems associated with weld lines and/or internal pores in manufactured components remain. An objective of the present invention is therefore to alleviate the problems of the prior art in order to eliminate or at least reduce defects in manufactured components, in particular in components without a through hole. The invention thus intends to provide a method for alleviating such problems and an apparatus in which the method is performed.

### The invention

The present invention relates to a moulding tool assembly for powder injection moulding a component as specified in claim 1.

According to one embodiment, the power source, comprising hydraulic means and/or pneumatic means, e.g. compressed air, is configured to maintain the core pin in its front end position until the pressure exerted by the discharged moulding material ranges from 0.1 to 20 bar, for example 1 to 12 bar, preferably from 5 to 10 bar, and more preferably 6 to 8 bar during the filling of the mould cavity which pressure moves the core pin to the rear end position. The predetermined pressure threshold corresponds to a certain period of time the core pin is maintained in its front end position from the point in time the moulding material starts to fill the mould cavity.

According to one embodiment, the power source, comprising electric means comprising an electric servo motor, is configured to maintain the core pin in its front end position for a period of time ranging from 0.001 to 0.5 seconds, preferably from 0.01 to 0.25 seconds, more preferably from 0.05 to 0.15 seconds or 0.05 to 0.1 seconds counted from the point in time the moulding material starts to fill the mould cavity.

According to one embodiment, the feed rate of the moulding material into the mould cavity ranges from 1 to 70, for example 5 to 60, 5 to 55, 5 to 20 or 12 to 18 cm³ moulding material/s.

By the wording "facing the outlet opening" is meant that the end surface of the core pin at least in its rear end position faces the outlet opening. In certain embodiments, the end surface of the core pin is in its front end position positioned inside the inlet channel. Thus, the wording "facing the outlet opening" comprises embodiments wherein the end surface of the core pin is positioned inside the inlet channel when the core pin is in its front end position. Such embodiments may be enabled when the core pin has a smaller diameter than the inner diameter of the inlet channel such that the core pin, for example being shaped as a cylinder, can pass through the outlet opening of the outlet end of the inlet channel.

The present moulding tool assembly enables manufacturing of high-quality components without a through hole such as cutting tool inserts made of e.g. cemented carbide, ceramic or cermet and binder metal. It has been found that the moulding tool assembly enables elimination or at least reduction of internal pores and/or weld lines in the manufactured component by providing a more uniform flow of moulding material into the mould cavity compared to a moulding tool assembly without a core pin being impinged by moulding material which core pin then subsequently retracts from its front end position to its rear end position.

By the wording "impinge on the core pin" is meant that moulding material discharged into the mould cavity impinges directly on the end portion of the core pin or moulding material impinging on a layer of moulding material which already has been formed on the end portion of the core pin.

According to one embodiment, the moulding tool assembly comprises four tool parts arranged to define a mould cavity. According to one embodiment, the moulding tool assembly comprises two tool parts or three tool parts or five tool parts or more than five tool parts. In these embodiments, at least one of the tool parts is movably arranged such that the mould cavity may be opened and closed to enable removal of the formed component.

According to one embodiment, the second tool part is comprised of two tool halves. When the mould cavity is closed, the two tool halves of the second tool part together define the second tool part. Preferably, each of the two tool halves of the second tool part is provided with a peripheral recess, e.g. a semi-cylindrical shape, which, when the two tool halves are joined, jointly form an opening, preferably a cylindrical opening, through which the core pin may extend.

According to one embodiment, the inlet channel may protrude into the mould cavity up to 10% of the distance between the outlet opening and the end surface of the core pin when the core pin is positioned in its rear end position. However, preferably the outlet opening is flush with the inner surface of the first tool part facing the mould cavity, whereby the inlet channel does not protrude into the mould cavity.

According to one embodiment, the moulding material comprises hard particles selected from at least one of WC, TiC, TiN and/or TiCN and a binder metal preferably selected from Co and/or Fe and/or Ni; and a polymeric binder.

According to one embodiment, the power source as used herein comprises electric means, hydraulic means, and/or pneumatic means. Preferably, the power source comprises an electric servo motor.

By the term "servo motor" as used herein is particularly meant a power source for driving the movement of the core pin. The servo motor is preferably connected to a control unit which is programmed to command the servo motor to move the core pin at a predetermined speed to the commanded rear and front end positions at a predetermined point in time. Thus, in the present invention, the moulding tool assembly further comprises a control unit connected to the power source for controlling the power source.

The "predetermined time" and the "predetermined pressure threshold" to maintain the core pin in its front end position prior to moving the core pin to the rear end position can be determined by conducting trials prior to performing the method for manufacturing a component in e.g. a transparent mould cavity in which impingement as a function of the distance between the end surface of the core pin and the outlet opening can be studied for given feed rates of moulding material as disclosed herein. The flow behaviour of the moulding material can be studied for example by means of a high-speed camera capable of capturing moving images with exposures of less than 1/1000 second. The front end position of the core pin can thus be varied by increasing the distance from a (minimal) distance (at which impingement occurs) to determine the maximal distance at which impingement still occurs for a given feed rate of moulding material into the mould cavity. For a given position of the core pin in its front end position (at which impingement occurs), the point in time the retraction of the core pin may start can be determined from the volume of the mould cavity occupied by the moulding material when the flow front impinges on the end surface of the core pin and the feed rate of moulding material. Thus, as the flow front of the moulding material impinges on the end surface of the core pin, the volume portion of the mould cavity filled by moulding material at a given feed rate corresponds to a certain period of time elapsed after which the retraction is initiated. Further, as the volume of the entire mould cavity likewise is known, the portion not yet filled when the retraction of the core pin is initiated can be determined by subtracting the already filled volume from the entire volume of the mould cavity. The period of time for completing the entire filling can thus be determined and thereby the period of time within which the core pin needs to have completed its retraction prior to completion of the filling. For example, if the end surface of the core pin is positioned such that it is impinged when 50 % of the mould cavity has been filled, the remaining portion (50 % of the volume) will take the same time to fill as the already filled volume if the feed rate is constant. Thus, by controlling the feed rate, the propagation of the flow front (and the volume of occupied by moulding material) in the mould cavity over time is controlled. The speed of the core pin can be set such that it retracts at a rate such that the flow front of the moulding material and the end surface of the core pin remain in contact.

In the case electric means are used as power source, the electric servo motor must of course be selected such that it resists an initial build-up of pressure when the moulding material enters the mould cavity until the point in time the core pin is retracted.

Servo motors, such as electric servo motors, are generally known to drive various mechanisms in moulding tool assemblies such as a drive mechanism for a screw (treaded piston) and the like. Servo motors are generally known and described in e.g. US 4,785,221, US 4,540,359, US 9,475,224, and DE1 995 9739.

An electric servo motor enables precise control of movement of the core pin and is not dependent on the pressure in the mould cavity which varies during the filling of the mould cavity.

According to one embodiment, the electric means comprises an electric servo motor and the control unit is configured to control the electric servo motor to
i) move the core pin to its front end position prior to initiating filling of the mould cavity
ii) retract the core pin from its front end position to its rear end position after the filling has been initiated while the mould cavity is being filled;
iii) position the core pin in its rear end position prior to completion of the filling.

According to one embodiment, the power source comprises pneumatic means such as compressed air. The compressed air may be employed to move and maintain the core pin in its front end position by pressing the rear end of the core pin facing away from the outlet opening at a predetermined pressure along the horizontal axis towards the outlet opening. For example, compressed air may be applied to the rear end of the core pin via a hose or other conduit with appropriate means for connection, e.g. a threaded nipple screwed into a hole at the centre of the rear end of the core pin. A valve may be used to adjust the pressure applied to the rear end of the core pin. The degree of pressure applied to the rear end of the core pin will determine the pressure threshold at which the core pin is pressed back to the rear end position by the pressure exerted by the moulding material entering the mould cavity. The higher the degree of compressed air applied, the longer the delay before the pressure threshold is reached. The pressure of compressed air applied may thus be used to control the point in time the core pin shall initiate its retraction to the rear end position. Preferably, a further valve such as an adjustable needle valve may be arranged to the hose or other conduit to vent out entrapped compressed air as the core pin is retracted after the pressure threshold has been exceeded in the mould cavity. As the adjustable valve may be adjusted to vent out compressed air in different extents, the speed of retraction of the core pin may be controlled by the valve. A low degree of venting out compressed air will result in a slower retraction of the core pin whereas a higher degree of venting out compressed air will enable faster retraction of the core pin. The speed of the retraction of the core pin is preferably selected such that the end portion of the core pin remains in contact with the flow front of the moulding material throughout the retraction of the core pin.

Preferably, the inlet channel extends centrally through the opening in the first tool part. A more uniform filling of the mould cavity is then enabled.

Preferably, the core pin extends centrally through the opening in the second tool part.

According to one embodiment, the end surface of the core pin has a flat, centrally protruding or centrally recessed shape. The shape of the end surface of the core pin will influence the shape of the manufactured component.

According to one embodiment, the end surface of the core pin is flush with the second tool part when the core pin is in its rear end position. In the case of a recessed or a protruding end surface, the periphery of the end surface of the core pin is preferably flush with the surrounding surface of the second tool part.

The recessed or protruding end surface may extend axially at most up to about 0.1 mm or up to 0.3 mm or up to 0.5 mm or up to 1 mm along the horizontal axis of the core pin. In these embodiments, the recessed or protruding surface constitutes a limited portion of the total length of the core pin considering the core pin may extend for example at least 10 mm or at least 15 mm or up to for example 20 mm within the cavity depending on the volume of the mould cavity.

According to one embodiment, the cross section of the core pin is circular, square-shaped, triangular, elliptical or oval-shaped, preferably circular or elliptical, and most preferably circular.

According to one embodiment, the core pin has the same cross section at least throughout its axial extension inside the mould cavity.

According to one embodiment, the core pin has a rear end facing away from the outlet opening outside the mould cavity which rear end has a larger cross section than the portion of the core pin extending inside the mould cavity.

According to one embodiment, mechanical stoppers are arranged outside the mould cavity to stop the movement of the core pin beyond its front end position and rear end position. The mechanical stoppers may for example be arranged to mechanically contact and stop the rear end of the core pin having a larger cross section than the remaining portion of the core pin.

According to one embodiment, the core pin has a cylindrical cross section throughout its length. According to one embodiment, the core pin has a diameter ranging from 2 to 14 mm, for example 3 to 9 mm or 7 to 9 mm, at least along its extension inside the mould cavity.

According to one embodiment, the inlet channel is cylindrical. According to one embodiment, the outlet opening is circular and has a diameter ranging from 1 to 12 mm, for example 3 to 6 mm or 7 to 9 mm. The area of the outlet opening is suitably selected based on inter alia the volume of the cavity to be filled.

According to one embodiment, the ratio of the area of the end surface of the core pin to the area of the outlet opening ranges from 1.5:1 to 1:1.5, preferably from 0.8:1 to 1:0.8, and more preferably from 0.9:1 to 1:0.9. The end surface area ratios as specified herein provide for preferred impingement conditions and contribute to uniform flow of the moulding material in the mould cavity.

The mould cavity may have any suitable geometric shape. For example, the mould cavity may have a shape for manufacturing drill tips, milling tips or other inserts of any suitable design. However, the maximum size of a shaped component is limited by the cooling and solidification properties of the moulding material. A large volume may give rise to cracks during solidification. The probability of crack formation increases with increasing size of the component being formed. Therefore, the volume of the mould cavity preferably is 50 cm³ or less such as 40 cm³ or less. The minimum volume of the mould cavity is set by the dimensional requirements of the component and the volume may therefore range from for example 0.05 to 50 cm³. Preferably, the component manufactured by the method as described herein has a diameter up to 40 mm, for example up to 30 mm or up to 20 mm or up to 15 mm, such as up to 10 mm, e.g. from 3 to 40 mm or from 3 to 30 mm or for example from 5 to 10 mm.

According to one embodiment, the moulding tool assembly is used in a cold channel system or a hot channel system. A hot channel system typically comprises a heated channel, or manifold, which is connected to the inlet channel. In a hot channel system, the moulding tool may comprise several mould cavities (defined by several tool parts) wherein each mould cavity is supplied with moulding material from a separate inlet channel.

The invention also relates to a method as specified in claim 8.

In the present invention, the power source is controlled by the control unit to move the core pin from the rear end position to the front end position and from the front end position to the rear end position.

Step i) of the method may be performed either before or after the discharge of moulding material is initiated into the mould cavity provided the core pin is positioned in its front end position prior to the moulding material impinges on the core pin in its front end position.

A more uniform flow may be obtained as the moulding material impinges on the core pin as it enters the mould cavity. Elimination or reduction of defects such as formation of internal pores and weld lines may thus be obtained. By completing the retraction of the core pin prior to the completion of the filling, the manufactured component will not exhibit any hole or cavity caused by the core pin not retracted in time before the component starts to solidify. According to one embodiment, the method further comprises retracting the core pin at a speed such that the end portion of the core pin remains in contact with the flow front of the moulding material throughout the retraction from the front end position to the rear end position. It has been found that an even more uniform filling of the mould cavity then may be obtained which further reduces or eliminates formation of weld lines and/or internal pores in the manufactured component.

As the moulding material flows in the direction of the retracting core pin, the linear flow thereof may vary depending on the shape of the mould cavity. For example, a mould cavity defining a tapered shape extending along the horizontal axis will result in an increasing or decreasing linear flow rate. As the volumetric flow rate (in mm³/s) of the moulding material discharged into the mould cavity preferably is maintained constant, an adjustment of the speed of the core pin is preferably performed such that the end portion of the core pin and the flow front of the moulding material remains in contact throughout the filling. Thus, for example when a section of the mould cavity extending along the horizontal axis is greater than other sections of the mould cavity, a lower speed of retraction of the core pin is used to maintain the end portion of the core pin in contact with the flow front also at such greater section.

According to one embodiment, the method comprises moving the core pin by means of an electric servo motor connected to a control unit controlling the electric servo motor. The control unit may thus be programmed to move the core pin by commanding the electric servo motor to move the core pin accordingly. A precise and accurate control of movement of the core pin and the speed of the movement of the core pin will impart even less defects and thus result in manufacturing of improved components.

According to one embodiment, the method comprises controlling the power source comprising hydraulic and/or pneumatic means such as compressed air by means of the control unit as further disclosed herein. According to one embodiment, the method comprises moving the core pin by means of compressed air as a power source, preferably in combination with a control unit controlling the degree of compressed air applied to the core pin. The control unit may thus be programmed to apply compressed air to the core pin to move it to its front end position. The core pin comprises a rear end facing away from the outlet opening to which compressed air preferably is applied at a pressure ranging from 0.1 to 20 bar, e.g. from 1 to 12 or from 4 to 12 bar or from 6 to 8 bar. This pressure corresponds to the predetermined pressure threshold as further described herein. The pressure of compressed air applied to the rear end of the core pin influences the point in time at which the threshold pressure is exceeded at which pressure the core pin is pressed back to its rear end position by the entering moulding material. A higher pressure exerted by the compressed air results in a more delayed retraction of the core pin. A valve for controlling the pressure pressing the core pin to its front end position is preferably arranged as further described herein. Control including opening and closing of the valve may be performed by a control unit such as a main control unit further controlling other functions of the moulding tool assembly. The control unit in such embodiments may be programmed to open the valve when compressed air is to be supplied to the rear end of the core pin and close the valve when moulding material enters into the mould cavity.

When the core pin starts to retract, compressed air applied to the rear end of the core pin is preferably vented out. Compressed air may be vented out by means of an adjustable valve as further described herein to different degrees. The degree of venting air may be used to adapt the speed of the core pin such that the end portion of the core pin maintains contact with the flow front of the moulding material and such that the core pin reaches its rear end position at a point in time before the filling of the mould cavity has been completed.

According to one embodiment, step iii) of the method comprises completing the retraction of the core pin to its rear end position up to 0.1 seconds or up to 0.05 seconds or up to 0.01 seconds prior to the filling of the mould cavity is completed. Preferably, the retraction of the core pin is completed at least 0.005 seconds prior to the completion of the filling of the mould cavity, for example 0.01 seconds prior to completion of the filling. The completion of the retraction is preferably selected to reduce the production cycle as much as possible while having a short margin before the filling is completed.

According to one embodiment, the filling of the mould cavity is completed within 5 seconds, for example within 4 seconds or 3 seconds, for example within 1 second, e.g. within 0.1 to 1 seconds, or within 0.1 to 0.35 seconds. The time of filling also depends to a great extent on the volume of the mould cavity. Preferably, the filling rate of the mould cavity is maintained constant by a main control unit.According to one embodiment, step iii) of the method comprises completing the retraction of the core pin to its rear end position after at least 80 % or at least 95 % or at least 99 % of the volume of the mould cavity has been filled and before the completion of the filling. As evident from the disclosure herein, the period of time within which completion of the filling of the mould cavity occurs can be pre-calculated prior to performing the method, i.e. prior to starting production based on the knowledge of the volume of the mould cavity and the filling rate used. For example, 80 % filling of the volume of the mould cavity can then be easily calculated. In one embodiment, a sensor monitoring the degree of filling may also be used to control the filling.

According to one embodiment, the ratio of the time of retraction of the core pin from its front end position to its rear end position to the filling time is 80:100 to 99:100, for example 90:100 to 99:100 or 95:100 to 99:100.

According to one embodiment, step i) of the method comprises positioning the core pin in its front end position at a predetermined distance d being up to 60 % of the total distance between the outlet opening and the end surface of the core pin when the core pin is positioned in its rear end position. According to one embodiment, the distance d is up to 50% or up to 40% or up to 30% or up to 20 % or up to 10 % or up to 5 % or up to 3 % or up to 1% of the distance between the outlet opening and the end surface of the core pin when the core pin is positioned in its rear end position, i.e. when the end surface of the core pin is flush with the inner surface of the second tool part. Preferably, the distance d is at least 1 % of the distance between the outlet opening and the end surface of the core pin when the core pin is positioned in its rear end position, i.e. when the end surface of the core pin is flush with the inner surface of the second tool part.

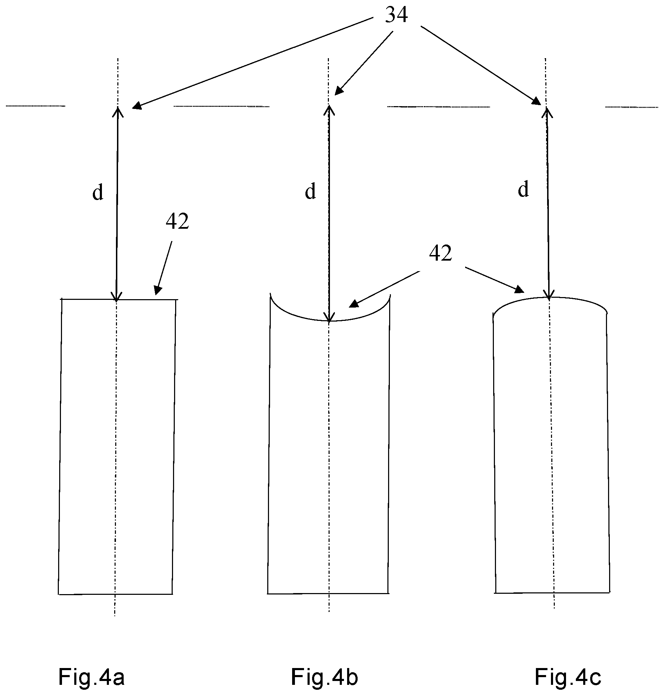

The predetermined distance d is measured from the point on the end surface of the core pin when the core pin is positioned in its front end position to the point on the outlet opening, wherein said points are intersected by the horizontal axis extending through the centre of the core pin and the centre of the inlet channel (as further illustrated in figures 4a-4c).

According to one embodiment, the predetermined distance d ranges from 1 to 20 mm, for example 1 to 15 mm, for example 1 to 10 mm, preferably from 1 to 5 mm or 1 to 2 mm.

According to one embodiment, the core pin in its front end position is positioned such that the end surface of the core pin is positioned 1 to 20 mm from the outlet opening, for example 1 to 15 mm, for example 1 to 10 mm, preferably from 1 to 5 mm or 1 to 2 mm from the outlet opening.

The predetermined distance d is selected prior to commencing manufacturing of components and the selection thereof may be based on a few trials, for example performed in a transparent mould cavity in which the flow behaviour of the moulding material may be studied at different distances d, for example by means of a high-speed camera capable of capturing moving images with exposures of less than 1/1000 second. The point in time impingement of moulding material on the core pin occurs may thus be readily observed. If for example the distance d is too long, erratic filling takes place resulting in air inclusions, weld lines and/or air-filled internal pores. In such a case, a shorter distance d may be tested to explore impingement behaviour. Also, the quality of the component obtained may be analyzed. Presence of weld lines etc are readily detected by means of e.g. a microscope such as a light microscope. Also, in such trials, by studying the flow of the moulding material and filling of the mould cavity, the speed of retraction of the core pin may be configured such that the end portion of the core pin remains in contact with the flow front of the moulding material. According to one embodiment, a sensor may be positioned on the core pin to detect an impulse when the front of the moulding material impinges on the core pin.

According to one embodiment, subsequent to the steps of the method as described herein, the component is cooled and solidified in the mould cavity for a predetermined period of time and then withdrawn therefrom following opening of the mould cavity. According to one embodiment, in a subsequent step, the component is subjected to de-binding and sintering suitably performed in a conventional manner known in the art. Sintering may be performed by placing the component in a sintering furnace that is heated typically to a temperature above the melting point of the binder metal in the component but below the melting point of the hard particles. After sintering, the component is preferably composed of remaining cemented carbide, ceramic, or cermet; and binder metal and can be retrieved as an end product.

The invention also relates to a component obtainable by the method as described herein being an insert comprising cemented carbide, ceramic or cermet without a through hole and free of weld lines. Examples of inserts include drill tips, milling tips, indexable inserts, or other types of inserts without a through hole and free of weld lines comprising cemented carbide, ceramic or cermet.

### Brief description of the drawings

Figure 1 shows a schematic view of a moulding tool assembly.
Figure 2a shows a schematic view of a moulding tool assembly with a core pin in its front end position. Figure 2b shows a schematic view of a moulding tool assembly with a core pin in a position on its way to its rear end position and front end position respectively in accordance with the indicated arrows. Figure 2c shows a schematic view of a moulding tool assembly with a core pin in its rear end position.
Figures 3a-3d show schematic views of a moulding tool assembly with the core pin positioned in a rear end position (figure 3a), a core pin in a position on its way to the front end position (figure 3b), a core pin positioned in its front end position (figure 3c), and a core pin in a position on its way to its rear end position (figure 3d).
Figures 4a-4c show schematic views of embodiments of the end surface of the core pin and the outlet opening of the inlet channel.
Figures 5a and 5b show embodiments illustrating the movement of a core pin between its respective end positions from a side view and a perspective view.
Figure 6a shows a schematic view of a core pin controlled by compressed air as a power source and mechanical stoppers for preventing the core pin to move beyond its end positions. Figure 6b shows a detailed view of compressed air applied to the rear end of the core pin.
Figures 7a and 7b show (non-sintered) green bodies (components) obtained by the method performed in the moulding tool assembly with a movable core pin (figure 7a) and without a movable core pin (figure 7b) respectively.
Figure 8 shows a flow scheme of the main steps for manufacturing a component according to the invention.

### Detailed description of embodiments

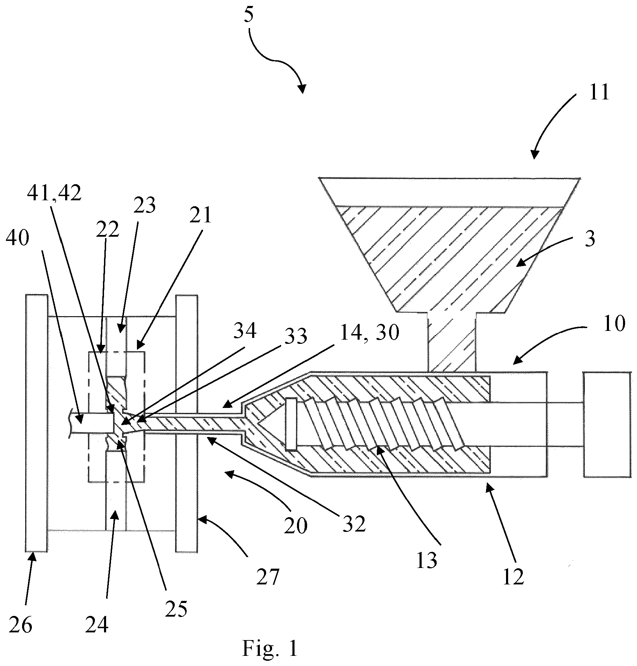

Figure 1 schematically shows a moulding tool assembly 5 comprising an inlet channel 30 for moulding material 3, wherein the moulding material 3 is supplied to the inlet channel 30 via an injection unit 10 and a hopper 11 receiving the moulding material 3. The moulding material 3 is a compound or feedstock of e.g. carbides, nitrides, and/or carbonitrides; a binder metal and a polymeric binder.

In a pretreating step performed prior to discharging moulding material 3 into the mould cavity 25 according to the invention, the moulding material 3 is supplied in melted form via a heated cylinder 12 melting the polymeric binder in the moulding material 3 such that the moulding material 3 forms a liquid slurry. A treaded piston 13, usually called a screw, is arranged in the cylinder 12 to mix and feed the moulding material 3 in the cylinder 12 and force it by an axial movement out from the cylinder 12 through nozzle 14 of the injection unit 10.

The moulding tool assembly 5 comprises a first tool part 21 and a second tool part 22 arranged opposite to each other. The moulding tool assembly 5 further comprises third and fourth tool parts 23 and 24, which also are arranged opposite to each other to define the mould cavity 25 together with the first and second tool parts 21, 22. The tool parts 21, 22, 23 and 24 are arranged to enable opening and closing of mould cavity 25. The second tool part 22 is movable in an axial direction towards and away from the first tool part 21 (to the right and left in figure 1) which is stationary. The third and the fourth tool parts 23, 24 are movably arranged in a direction towards and away from each other (upwards and downwards respectively in figure 1). The moulding tool assembly 5 further comprises a movable platen 26 which holds the second movable tool part 22 and a stationary platen 27 which holds the first stationary tool part 21.

A movable core pin 40 (only a portion of it shown in figure 1) extends through an opening in the second tool part 22 into mould cavity 25. An inlet channel 30 extends through an opening in the first tool part 21 to the mould cavity 25. The inlet channel 30 has an inlet opening 32 which is in fluid communication with the nozzle 14 of the injection unit 10.

A portion of the inlet channel 30 is tapered such that it narrows in the direction from the outlet opening 34 towards the inlet opening 32. The inlet channel 30 has an outlet end 33 with an outlet opening 34 for discharging the moulding material 3 into the mould cavity 25. The centre of the core pin 40 is horizontally aligned with the centre of the inlet channel 30.

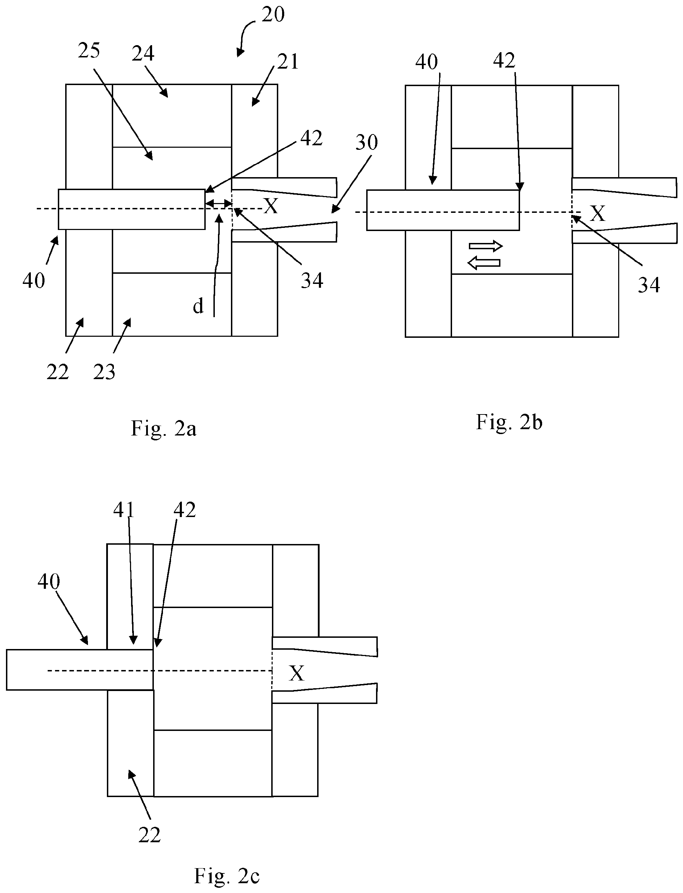

Figures 2a-2c show schematic views of core pin 40 in its front end position (fig.2a), the core pin 40 being in a position on its way to its front end position and rear end position (fig.2b) and in its rear end position (fig.2c). In figure 2a, the distance d between the end surface 42 of the core pin 40 in its front end position and the outlet opening 34 is indicated. In figure 2c, the end surface 42 is flush with the inner surface of the second tool part 22. In the rear end position in figure 2c, the end portion 41 of the core pin 40 seals the opening of the second tool part 22 through which the core pin 40 extends. In figures 2a-2c, a horizontal centre axis X extends through the centre of the mould cavity 25, the centre of the core pin 40 and the centre of the inlet channel 30.

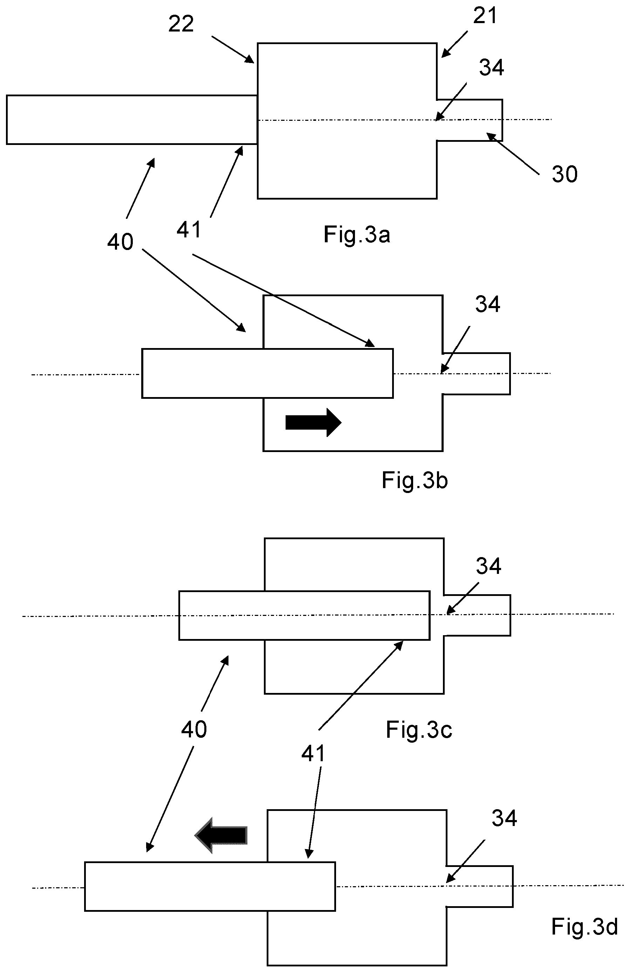

Figures 3a-3d show core pin 40 in its rear end position (figure 3a), the core pin 40 in a position on its way to its front end position (figure 3b), the core pin 40 positioned in its front end position (figure 3c), and the core pin 40 in a position on its way to its rear end position (figure 3d). In figures 3a-3d, the core pin 40 has a larger cross section than the outlet opening 34.

Figure 4a shows a core pin 40 having a flat end surface 42. Figure 4b shows a core pin 40 having a recessed end surface 42. Figure 4c shows a core pin 40 having a protruding end surface 42.

The distance d between the end surface 42 of the core pin 40 and the outlet opening 34 is defined as the distance between the point on the end surface 42 of the core pin 40 and the point on the outlet opening 34 being intersected by the horizontal centre axis as illustrated in figures 4a-4c.

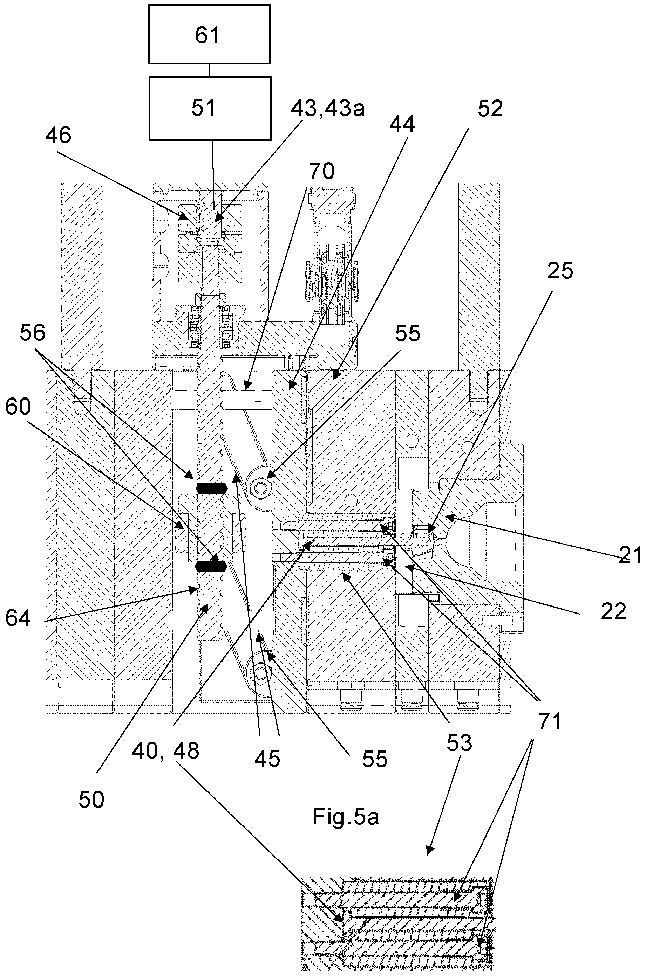

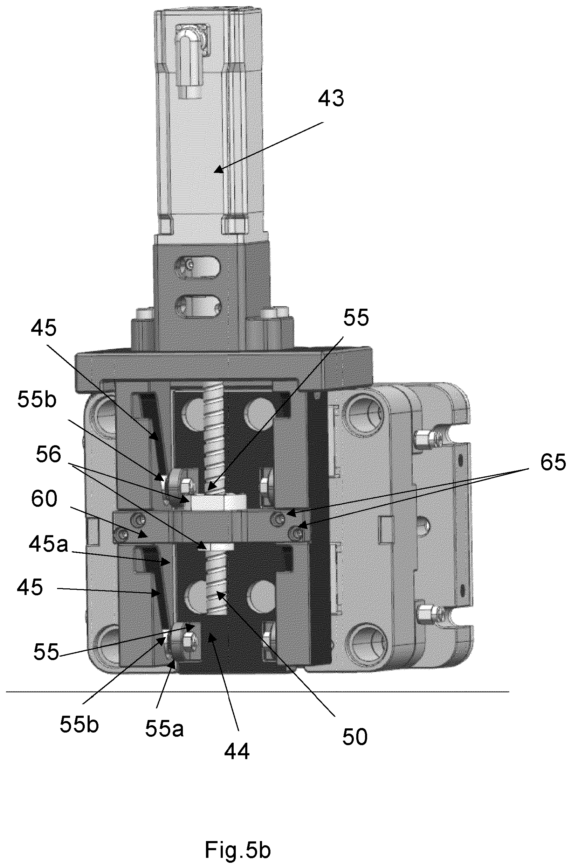

Figure 5a illustrates a control unit 51 connected to an electric servo motor 43. The control unit 51 is programmed to instruct the electric servo motor 43 to rotate a ball screw 50. The electric servo motor 43 is equipped with a gear box 46 which transfers the rotation of the servo motor 43 via shaft 43a to the ball screw 50. When the ball screw 50 rotates, nuts 56 will rotate and follow ball screw threads 64 of the ball screw 50 and thus move upwards or downwards along the axial extension of the ball screw 50 depending on the direction of rotation of the ball screw 50 controlled via control unit 51 and the gear box 46 of the electric servo motor 43. The nuts 56 will as they rotate along the ball screw 50 move a cross bar 60 as further illustrated in figure 5b upwards or downwards along the ball screw 50. The cross bar 60 is secured to rails 45a by means of screws 65 and further connected to the ball screw 50 via nuts 56. A core pin plate 44 to which core pin 40 is attached is further shown in figure 5a. Core pin plate 44 is provided with attachment means 55 provided with rounded holders 55a as further illustrated in figure 5b. A section 53 comprising core pin 40 is fixedly attached to core pin plate 44 by means of screws 71.

The core pin 40 is provided with a rear end 48 having a larger diameter than the remaining portion of the core pin 40 which prevents movement of the core pin 40 away from section 53. Guide bearings 55b are mounted in grooves 45 of rails 45a and further secured to rounded holders 55a of attachment means 55 as illustrated in figure 5b. The grooves 45 are angled (acute angle) to the vertical plane. As the cross bar 60 is moved upwards or downwards by the rotating ball screw 50, the position of guide bearings 55b in the grooves 45 will change. As the grooves 45 are angled to the vertical plane, attachment means 55 and core pin plate 44 to which attachment means 55 are attached will move in a direction perpendicularly to the vertical plane of the core pin plate 44 along a horizontal axis towards or away from the mould cavity 25 when the cross bar 60 and rails 45a are displaced upwards or downwards. A movement downwards of cross bar 60 will press attachment means 55, core pin plate 44 and core pin 40 away from the mould cavity 25 (towards the rear end position) and a movement upwards will result in a movement of the attachment means 55, core pin plate 44 and the core pin 40 towards the mould cavity 25 (towards the front end position). The design is so arranged that the horizontal displacement of core pin plate 44 corresponds to a movement of the core pin 40 between its rear and front end positions. In figure 5a, guiding rods 70 are further provided guiding the movement of the core pin plate 44.

Figure 5a further illustrates tool part 22 which together with tool part 21 define the mould cavity 25. The movement of tool part 22 is controlled by main control unit 61 via plate 52. The main control unit 61 is connected to control unit 51 to establish a two-way communication between control unit 51 and main control unit 61 which further control a wide variety of control and regulation functions in the moulding tool assembly 5 including for example movement of plate 52 equipped with means adapted to open and close the mould cavity 25 by controlling tool part 22, control of the treaded piston 13 for feeding moulding material 3 to the mould cavity 25 etc in a conventional manner known in the art.

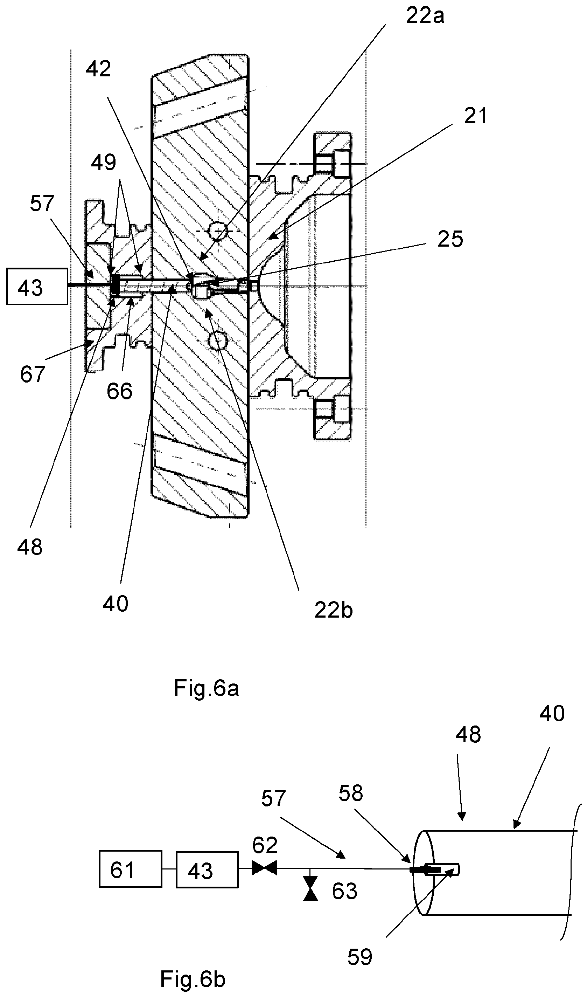

In figure 6a, core pin 40 is positioned in its rear end position. Mechanical stoppers 49 are provided on either side of rear end 48 of core pin 40. The rear end 48 has a larger diameter than the remaining portion of the core pin 40. The rear end 48 of the core pin 40 is axially movable in cylinder space 66 in insert element 67. Mechanical stoppers 49 stop movement of the rear end 48 beyond the mechanical stoppers 49 whereby the end surface 42 of the core pin 40 is prevented from moving beyond its rear and front end positions. Tool parts 21 and 22 comprising tool halves 22a and 22b are further indicated.

In figures 6a and 6b, compressed air is schematically illustrated as a power source 43. A two-way valve 62 positioned along a gas line 57 (a hose) is controlled by a main control unit 61 such that valve 62 is open when the mould cavity 25 is closed and closed when the filling of moulding material 3 is completed. Hose 57 is connected to a threaded nipple 58 in one end and to valve 62 in its other end. The threaded nipple 58 is connected in its other end to a central threaded hole 59 in the rear end 48 of core pin 40.

As the rear end 48 of the core pin 40 is exposed to compressed air, the core pin 40 is pressed to its front end position. As the moulding material 3 subsequently enters into the mould cavity 25, the core pin 40 will start to retract when a threshold pressure is exceeded pushing the core pin 40 back to its rear end position. As the core pin 40 is retracted, compressed air entrapped in hose 57 is vented out via adjustable needle valve 63 which is at least partially open to enable venting. By adjusting needle valve 63, the degree of venting entrapped air is controlled and thus the speed of the retracting core pin 40 such that the contact between the end portion 41 of the core pin 40 and the flow front of moulding material is maintained.

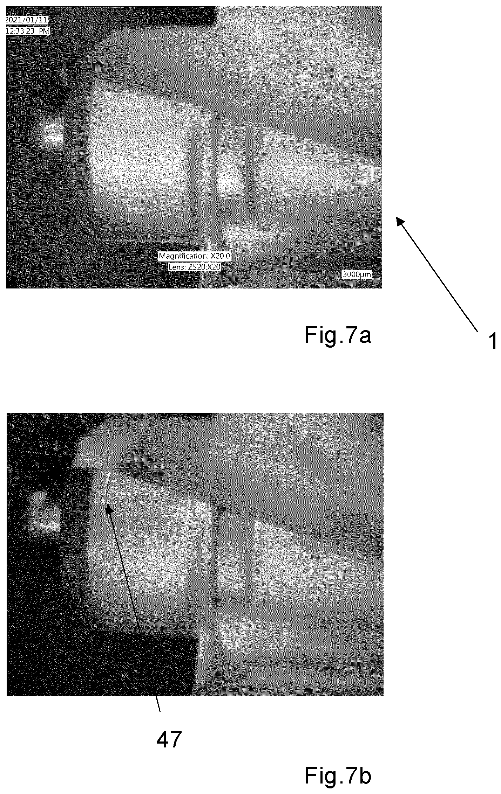

Figure 7b shows a green body manufactured in a moulding tool assembly 5 without a moving core pin 40 in which weld line 47 has been formed. Figure 7a shows a green body without weld lines manufactured in a moulding tool assembly 5 with a moving core pin 40 according to the invention.

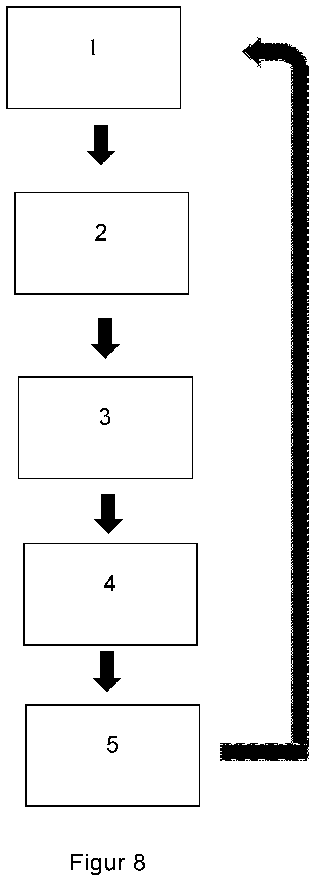

The following describes how the moulding tool assembly 5 may be operated as further illustrated in the flowsheet of figure 8:
1) In a first step, an openable mould cavity 25 of the moulding tool assembly 5 is open and the core pin 40 is moved from its rear end position to its front end position. The core pin 40 is connected to a power source 43 which may be an electric servo motor 43 driving the movement of the core pin 40. The electric servo motor 43 is controlled by a control unit 51 programmed to move the core pin 40 according to commands from the control unit 51.
2) In a second step, a main control unit 61 closes the moulding tool 20 of the moulding tool assembly 5. The main control unit 61 is programmed to control all operations in the injection moulding assembly 5 except for the core pin 40 which is controlled by control unit 51. An alternative way of controlling all operations of the injection moulding assembly 5 is a main control unit 61 as referred to herein which also controls the core pin 40, for example by integrating the control unit 51 therein. In the embodiment described herein, the control unit 51 is connected to the main control unit 61 and the control units allow for two-way communication.
3) In a third step, the electric servo motor 43 transmits a clearing signal to the control unit 51 when the core pin 40 has been moved to its front end position and thus executed the command from the control unit 51. The clearing signal is then in turn forwarded from the control unit 51 to the main control unit 61 whereafter the main control unit 61 sends a signal to initiate filling of the mould cavity 25. A triggering signal is then sent to the control unit 51 from the main control unit 61 that the filling of the cavity 25 has been initiated. As the filling is started, the control unit 51, being programmed to control core pin 40 via the electric servo motor 43, controls the retraction of the core pin 40 from its front end position to its rear end position. The main control unit 61 is programmed to fill the mould cavity 25 at a predetermined flow rate of moulding material 3. As the volume of the mould cavity 25 has been determined and a predetermined flow rate of moulding material 3 has been programmed in the main control unit 61, the time for filling the mould cavity 25 is utilized to program the control unit 51 such that the core pin 40 is retracted before the mould cavity 25 is entirely filled. Control unit 51 thus sends a signal to the electric servo motor 43 to move the core pin 40 at a predetermined point in time and at such speed that it reaches its rear end position prior to the completion of the filling operation. Then a check signal is sent to the control unit 51 from the electric servo motor 43 that the core pin 40 is positioned in its rear end position.
4) In a fourth step, the main control unit 61 receives the check signal in step 3 from control unit 51 and retains the mould cavity 25 filled with moulding material 3 for a predetermined period of time to let the component solidify and cool.
5) In a fifth step, the moulding tool assembly 5 opens the mould cavity 25 via main control unit 61 whereby the tool part 22 is withdrawn axially from the tool part 21. The manufactured component 1 is withdrawn in a conventional manner, e.g. by means of a robot.

The removed component is then suitably subjected to de-binding and sintering. A new process cycle for manufacturing a component is initiated in the moulding tool assembly in the same way by following steps 1-5.

### Example

Drill tips with a diameter of 16 mm were powder injection moulded using a moulding tool assembly 5 with a cylindrical movable core pin 40 positioned in its front end position of the mould cavity 25 before moulding material 3 was injected. The mould cavity 25 had a volume of 3.5-4 cm³. The end surface 42 of the core pin 40 was positioned in its front end position 8 mm from its rear end position and 8 mm from the outlet opening 34. The distance between the outlet opening 34 and the end surface 42 of the core pin 40 in its rear end position (flush with the tool part 22 in figure 1) was 16 mm. A hose 57 was connected to the rear end 48 of the core pin 40 (facing away from the outlet opening 34) outside the mould cavity 25. A threaded nipple 58 connected to the hose 57 was attached via a central hole 59 at the rear end 48 of the core pin 40 to enable supply of pressurized air via the hose 57. Compressed air at a pressure of about 7 bar was applied to the rear end 48 of core pin 40 in a direction towards the outlet opening 34. The core pin 40 was thus initially positioned and pressed towards its front end position. Following discharge of moulding material 3 into the mould cavity 25 at a flow rate of 15 cm³/s, the core pin 40 was retracted to its rear end position when the pressure exerted by the moulding material 3 exceeded the threshold pressure. When the core pin 40 reached the rear end position, the flat end surface 42 of the retracted core pin 40 was flush with the surrounding surface of tool part 22. Mechanical stoppers 49 were arranged to stop the movement of the core pin 40 beyond its respective end positions as further described in figure 6a.

The filling of the mould cavity 25 was completed 0.3 seconds after the filling was started and the core pin 40 was retracted to its rear end position about 0.1 seconds before the filling was completed.

In figure 7 it could be noted that component 1 (green body) manufactured with a movable core pin 40 had no weld lines (see figure 7a) whereas component 1 manufactured without a moving core pin (the core pin remaining in its rear end position during the method) had visible weld lines 47 (see figure 7b).

## Claims

1. Moulding tool assembly (5) for powder injection moulding a component (1) comprising
i) at least a first and a second tool part (21, 22, 22a, 22b, 23, 24) arranged to define a mould cavity (25) for forming a component (1)
ii) an inlet channel (30) for filling the mould cavity (25) with moulding material (3), the inlet channel (30) extending through an opening in the first tool part (21) to the mould cavity (25) and comprising an outlet end (33) having an outlet opening (34) for discharging the moulding material (3) from the inlet channel (30) into the mould cavity (25);
iii) a core pin (40) extending through an opening in the second tool part (22, 22a, 22b), the core pin (40) being movable between a rear end position and a front end position along a horizontal axis extending through the centre of the core pin (40) and the centre of the inlet channel (30), the core pin (40) comprising an end portion (41) having an end surface (42) facing the outlet opening (34); the core pin (40) being configured to seal the opening in the second tool part (22, 22a, 22b) with the end portion (41) thereof when the core pin (40) is positioned in its rear end position; and wherein the core pin (40) in its front end position is positioned such that moulding material (3) entering the mould cavity (25) impinges on it; and
iv) a power source (43) configured to maintain the core pin (40) in its front end position until a pressure ranging from 0.1 to 20 bar is exceeded during filling of the mould cavity (25) moving the core pin (40) to the rear end position; or
v) a power source (43) configured to maintain the core pin (40) in its front end position for a period of time ranging from 0.001 to 1 seconds counted from the point in time the moulding material starts to fill the mould cavity (25) and thereafter move the core pin (40) to the rear end position after said period of time;
wherein the moulding tool assembly (5) further comprises a control unit (51) connected to the power source (43) and configured to control the power source (43).

2. Moulding tool assembly (5) according to claim 1, wherein the power source (43) comprises electric, hydraulic, or pneumatic means.

3. Moulding tool assembly (5) according to claim 2, wherein the electric means comprises an electric servo motor, and wherein the control unit (51) is configured to control the electric servo motor to
a. move the core pin (40) to its front end position prior to initiating filling of the mould cavity (25)
b. retract the core pin (40) from its front end position to its rear end position after the filling has been initiated while the mould cavity (25) is being filled;
c. position the core pin (40) in its rear end position prior to completion of the filling.

4. Moulding tool assembly (5) according to any one of claims 1 to 3, wherein the inlet channel (30) extends centrally through the opening in the first tool part (21).

5. Moulding tool assembly (5) according to any one of claims 1 to 4, wherein the ratio of the area of the end surface (42) of the core pin to the area of the outlet opening (34) ranges from 1.5:1 to 1:1.5.

6. Moulding tool assembly (5) according to any one of claims 1 to 5, wherein the core pin (40) has a rear end (48) facing away from the outlet opening (34) outside the mould cavity (25) having a larger cross section than inside the mould cavity (25).

7. Moulding tool assembly according to any one of claims 1 to 6, wherein mechanical stoppers (49) are arranged outside the mould cavity to stop the movement of the core pin (40) beyond its front end position and rear end position.

8. Method for manufacturing a component (1) by means of powder injection moulding in a moulding tool assembly (5) according to any one of claims 1 to 7, the method comprising
i) positioning the core pin (40) in its front end position at which position the end surface (42) of the core pin (40) is positioned up to 20 mm from the outlet opening (34) and at which position moulding material (3) entering the mould cavity (25) impinges on the core pin (40)
ii) filling the mould cavity (3) with moulding material (25) discharged through the outlet opening (34) of the inlet channel (30)
iii) retracting the core pin (40) from the front end position to the rear end position at a speed such that the end portion (41) of the core pin (40) remains in contact with the flow front of the moulding material (25) throughout the retraction from the front end position to the rear end position and such that the retraction of the core pin (40) is completed prior to the filling of the mould cavity is completed.

9. Method according to claim 8, comprising moving the core pin (40) by means of an electric servo motor (43) connected to a control unit (51) controlling the electric servo motor (43).

10. Method according to claim 8 or 9, wherein step iii) comprises completing the retraction of the core pin to its rear end position up to 0.01 seconds prior to the filling of the mould cavity is completed.

11. Method according to any one of claims 8 to 10, wherein step iii) comprises completing the retraction of the core pin (40) to its rear end position after at least 80 % of the volume of the mould cavity (25) has been filled and before the completion of the filling.

12. Method according to any one of claims 8 to 11, wherein the moulding tool assembly comprises a control unit (51) connected to the power source (43) for controlling the power source (43); wherein the control unit (51) is configured to control the pneumatic and/or hydraulic means or, the electric servo motor to
a. move the core pin (40) to its front end position prior to initiating filling of the mould cavity (25)
b. retract the core pin (40) from its front end position to its rear end position after the filling has been initiated while the mould cavity (25) is being filled;
c. position the core pin (40) in its rear end position prior to completion of the filling.

13. Method according to any one of claims 8 to 12, wherein a sensor is connected to the control unit to monitor the speed of the core pin (40).

## Patentansprüche

1. Formwerkzeuganordnung (5) zum Pulverspritzgießen eines Bauteils (1), umfassend
i) mindestens ein erstes und ein zweites Werkzeugteil (21, 22, 22a, 22b, 23, 24), die so angeordnet sind, dass sie einen Formhohlraum (25) zum Formen eines Bauteils (1) bilden
ii) einen Einlasskanal (30) zum Befüllen des Formhohlraums (25) mit Formmaterial (3), wobei sich der Einlasskanal (30) durch eine Öffnung im ersten Werkzeugteil (21) zum Formhohlraum (25) erstreckt und ein Auslassende (33) mit einer Auslassöffnung (34) zum Ausleiten des Formmaterials (3) aus dem Einlasskanal (30) in den Formhohlraum (25) umfasst;
iii) einen Kernstift (40), der sich durch eine Öffnung im zweiten Werkzeugteil (22, 22a, 22b) erstreckt, wobei der Kernstift (40) entlang einer horizontalen Achse, die durch die Mitte des Kernstifts (40) und die Mitte des Einlasskanals (30) verläuft, zwischen einer hinteren Endposition und einer vorderen Endposition bewegbar ist, wobei der Kernstift (40) einen Endabschnitt (41) mit einer der Auslassöffnung (34) zugewandten Endfläche (42) aufweist; wobei der Kernstift (40) so ausgebildet ist, dass er die Öffnung im zweiten Werkzeugteil (22, 22a, 22b) mit seinem Endabschnitt (41) abdichtet, wenn der Kernstift (40) in seiner hinteren Endposition positioniert ist; und wobei der Kernstift (40) in seiner vorderen Endposition so positioniert ist, dass in den Formhohlraum (25) eintretendes Formmaterial (3) auf ihn auftrifft; und
iv) eine Energiequelle (43), die so ausgelegt ist, dass sie den Kernstift (40) in seiner vorderen Endposition hält, bis während des Füllens des Formhohlraums (25) ein Druck im Bereich von 0,1 bis 20 bar überschritten wird, wodurch der Kernstift (40) in die hintere Endposition bewegt wird; oder
v) eine Energiequelle (43), die so ausgelegt ist, dass sie den Kernstift (40) für einen Zeitraum von 0,001 bis 1 Sekunde, gerechnet ab dem Zeitpunkt, zu dem das Formmaterial beginnt, den Formhohlraum (25) zu füllen, in seiner vorderen Endposition hält und den Kernstift (40) danach nach Ablauf dieses Zeitraums in die hintere Endposition bewegt;
wobei die Formwerkzeuganordnung (5) ferner eine Steuereinheit (51) umfasst, die mit der Energiequelle (43) verbunden und so ausgelegt ist, dass sie die Energiequelle (43) steuert.

2. Formwerkzeuganordnung (5) nach Anspruch 1, wobei die Energiequelle (43) elektrische, hydraulische oder pneumatische Mittel umfasst.

3. Formwerkzeuganordnung (5) nach Anspruch 2, wobei die elektrischen Mittel einen elektrischen Servomotor umfassen und wobei die Steuereinheit (51) so ausgelegt ist, dass sie den elektrischen Servomotor so steuert, dass
a. der Kernstift (40) vor dem Beginn des Füllvorgangs des Formhohlraums (25) in seine vordere Endposition bewegt wird
b. der Kernstift (40) nach dem Einleiten des Füllvorgangs aus seiner vorderen Endposition in seine hintere Endposition zurückgezogen wird, während der Formhohlraum (25) befüllt wird;
c. der Kernstift (40) vor Abschluss des Füllvorgangs in seiner hinteren Endposition positioniert wird.

4. Formwerkzeuganordnung (5) nach einem der Ansprüche 1 bis 3, wobei sich der Einlasskanal (30) mittig durch die Öffnung im ersten Werkzeugteil (21) erstreckt.

5. Formwerkzeuganordnung (5) nach einem der Ansprüche 1 bis 4, wobei das Verhältnis der Fläche der Endfläche (42) des Kernstifts zur Fläche der Auslassöffnung (34) im Bereich von 1,5:1 bis 1:1,5 liegt.

6. Formwerkzeuganordnung (5) nach einem der Ansprüche 1 bis 5, wobei der Kernstift (40) ein von der Auslassöffnung (34) wegweisendes hinteres Ende (48) außerhalb des Formhohlraums (25) aufweist, das einen größeren Querschnitt hat als innerhalb des Formhohlraums (25).

7. Formwerkzeuganordnung gemäß einem der Ansprüche 1 bis 6, wobei außerhalb des Formhohlraums mechanische Anschläge (49) angeordnet sind, um die Bewegung des Kernstifts (40) über seine vordere Endposition und seine hintere Endposition hinaus zu stoppen.

8. Verfahren zur Herstellung eines Bauteils (1) mittels Pulverspritzgießen in einer Formwerkzeuganordnung (5) gemäß einem der Ansprüche 1 bis 7, wobei das Verfahren umfasst
i) Positionieren des Kernstifts (40) in seiner vorderen Endposition, in der die Endfläche (42) des Kernstifts (40) bis zu 20 mm von der Auslassöffnung (34) entfernt positioniert ist und in der in den Formhohlraum (25) eintretendes Formmaterial (3) auf den Kernstift (40) trifft
ii) Befüllen des Formhohlraums (3) mit Formmaterial (25), das durch die AuslassÖffnung (34) des Einlasskanals (30) abgegeben wird
iii) Zurückziehen des Kernstifts (40) von der vorderen Endposition in die hintere Endposition mit einer Geschwindigkeit, die so bemessen ist, dass der Endabschnitt (41) des Kernstifts (40) während des gesamten Rückzugs von der vorderen Endposition in die hintere Endposition in Kontakt mit der Strömungsfront des Formmaterials (25) bleibt, und so, dass der Rückzug des Kernstifts (40) abgeschlossen ist, bevor das Befüllen des Formhohlraums abgeschlossen ist.

9. Verfahren nach Anspruch 8, umfassend das Bewegen des Kernstifts (40) mittels eines elektrischen Servomotors (43), der mit einer Steuereinheit (51) verbunden ist, die den elektrischen Servomotor (43) steuert.

10. Verfahren nach Anspruch 8 oder 9, wobei Schritt iii) das Beenden des Zurückziehens des Kernstifts in seine hintere Endposition bis zu 0,01 Sekunden vor dem Abschluss des Füllens des Formhohlraums umfasst.

11. Verfahren nach einem der Ansprüche 8 bis 10, wobei Schritt iii) das Beenden des Zurückziehens des Kernstifts (40) in seine hintere Endposition umfasst, nachdem mindestens 80 % des Volumens des Formhohlraums (25) befüllt wurden und bevor das Befüllen abgeschlossen ist.

12. Verfahren nach einem der Ansprüche 8 bis 11, wobei die Formwerkzeuganordnung eine mit der Energiequelle (43) verbundene Steuereinheit (51) zum Steuern der Energiequelle (43) umfasst; wobei die Steuereinheit (51) so konfiguriert ist, dass sie die pneumatischen und/oder hydraulischen Mittel oder den elektrischen Servomotor steuert, um
a. den Kernstift (40) vor dem Beginn des Füllvorgangs des Formhohlraums (25) in seine vordere Endposition zu bewegen
b. den Kernstift (40) nach dem Einleiten des Füllvorgangs aus seiner vorderen Endposition in seine hintere Endposition zurückzuziehen, während der Formhohlraum (25) befüllt wird;
c. den Kernstift (40) vor Abschluss des Füllvorgangs in seine hintere Endposition zu positionieren.

13. Verfahren nach einem der Ansprüche 8 bis 12, wobei ein Sensor mit der Steuereinheit verbunden ist, um die Geschwindigkeit des Kernstifts (40) zu überwachen.

## Revendications

1. Ensemble d'outillage de moulage (5) pour le moulage par injection de poudre d'un composant (1) comprenant
i) au moins une première et une seconde partie d'outil (21, 22, 22a, 22b, 23, 24) qui sont disposées pour définir une cavité de moule (25) destinée à former un composant (1)
ii) un canal d'entrée (30) destiné à remplir la cavité de moule (25) avec le matériau de moulage (3), le canal d'entrée (30) s'étendant à travers une ouverture dans la première partie d'outil (21) jusqu'à la cavité de moule (25) et comprenant une extrémité de sortie (33) ayant une ouverture de sortie (34) pour décharger le matériau de moulage (3) du canal d'entrée (30) dans la cavité de moule (25);
iii) une broche centrale (40) s'étendant à travers une ouverture dans la seconde partie d'outil (22, 22a, 22b), la broche centrale (40) étant mobile entre une position d'extrémité arrière et une position d'extrémité avant le long d'un axe horizontal s'étendant à travers le centre de la broche centrale (40) et le centre du canal d'entrée (30), la broche centrale (40) comprenant une partie d'extrémité (41) ayant une surface d'extrémité (42) faisant face à l'ouverture de sortie (34); la broche centrale (40) étant configurée pour sceller l'ouverture dans la seconde partie d'outil (22, 22a, 22b) avec sa partie d'extrémité (41) lorsque la broche centrale (40) est positionnée dans sa position d'extrémité arrière; et dans lequel la broche centrale (40) dans sa position d'extrémité avant est positionnée de telle sorte que le matériau de moulage (3) entrant dans la cavité de moule (25) vient frapper celle-ci; et
iv) une source d'énergie (43) configurée pour maintenir la broche centrale (40) dans sa position d'extrémité avant jusqu'à ce qu'une pression allant de 0,1 à 20 bar soit dépassée lors du remplissage de la cavité de moule (25), déplaçant la broche centrale (40) vers la position d'extrémité arrière; ou
v) une source d'énergie (43)
configurée pour maintenir la broche centrale (40) dans sa position d'extrémité avant pendant une période de temps allant de 0,001 à 1 seconde comptée à partir du moment où le matériau de moulage commence à remplir la cavité de moule (25) et ensuite déplacer la broche centrale (40) vers la position d'extrémité arrière après ladite période de temps; dans lequel l'ensemble d'outillage de moulage (5) comprend en outre une unité de commande (51) connectée à la source d'énergie (43) et configurée pour commander la source d'énergie (43).

2. Ensemble d'outillage de moulage (5) selon la revendication 1, dans lequel la source d'énergie (43) comprend des moyens électriques, hydrauliques ou pneumatiques.

3. Ensemble d'outillage de moulage (5) selon la revendication 2, dans lequel les moyens électriques comprennent un servomoteur électrique, et dans lequel l'unité de commande (51) est configurée pour commander le servomoteur électrique afin de
a. déplacer la broche centrale (40) vers sa position d'extrémité avant avant d'initier le remplissage de la cavité de moule (25)
b. rétracter la broche centrale (40) de sa position d'extrémité avant vers sa position d'extrémité arrière après que le remplissage a été initié pendant que la cavité de moule (25) est en cours de remplissage;
c. positionner la broche centrale (40) dans sa position d'extrémité arrière avant l'achèvement du remplissage.

4. Ensemble d'outillage de moulage (5) selon l'une quelconque des revendications 1 à 3, dans lequel le canal d'entrée (30) s'étend de manière centrale à travers l'ouverture dans la première partie d'outil (21).

5. Ensemble d'outillage de moulage (5) selon l'une quelconque des revendications 1 à 4, dans lequel le rapport de la surface de la surface d'extrémité (42) de la broche centrale à la surface de l'ouverture de sortie (34) va de 1,5:1 à 1:1,5.

6. Ensemble d'outillage de moulage (5) selon l'une quelconque des revendications 1 à 5, dans lequel la broche centrale (40) possède une extrémité arrière (48) faisant face à l'opposé de l'ouverture de sortie (34) à l'extérieur de la cavité de moule (25) ayant une section transversale plus grande qu'à l'intérieur de la cavité de moule (25).

7. Ensemble d'outillage de moulage selon l'une quelconque des revendications 1 à 6, dans lequel des butées mécaniques (49) sont disposées à l'extérieur de la cavité de moule pour arrêter le déplacement de la broche centrale (40) au-delà de sa position d'extrémité avant et de sa position d'extrémité arrière.

8. Procédé de fabrication d'un composant (1) au moyen du moulage par injection de poudre dans un ensemble d'outillage de moulage (5) selon l'une quelconque des revendications 1 à 7, le procédé comprenant
i) le positionnement de la broche centrale (40) dans sa position d'extrémité avant à laquelle la surface d'extrémité (42) de la broche centrale (40) est positionnée jusqu'à 20 mm de l'ouverture de sortie (34) et à laquelle le matériau de moulage (3) entrant dans la cavité de moule (25) vient frapper la broche centrale (40)
ii) le remplissage de la cavité de moule (3) avec le matériau de moulage (25) déchargé à travers l'ouverture de sortie (34) du canal d'entrée (30)
iii) la rétraction de la broche centrale (40) de la position d'extrémité avant vers la position d'extrémité arrière à une vitesse telle que la partie d'extrémité (41) de la broche centrale (40) reste en contact avec le front d'écoulement du matériau de moulage (25) tout au long de la rétraction de la position d'extrémité avant vers la position d'extrémité arrière et de telle sorte que la rétraction de la broche centrale (40) soit achevée avant l'achèvement du remplissage de la cavité de moule.

9. Procédé selon la revendication 8, comprenant le déplacement de la broche centrale (40) au moyen d'un servomoteur électrique (43) connecté à une unité de commande (51) commandant le servomoteur électrique (43).

10. Procédé selon la revendication 8 ou 9, dans lequel l'étape iii) comprend l'achèvement de la rétraction de la broche centrale vers sa position d'extrémité arrière jusqu'à 0,01 seconde avant l'achèvement du remplissage de la cavité de moule.

11. Procédé selon l'une quelconque des revendications 8 à 10, dans lequel l'étape iii) comprend l'achèvement de la rétraction de la broche centrale (40) vers sa position d'extrémité arrière après qu'au moins 80 % du volume de la cavité de moule (25) a été rempli et avant l'achèvement du remplissage.

12. Procédé selon l'une quelconque des revendications 8 à 11, dans lequel l'ensemble d'outillage de moulage comprend une unité de commande (51) connectée à la source d'énergie (43) pour commander la source d'énergie (43); dans lequel l'unité de commande (51) est configurée pour commander les moyens pneumatiques et/ou hydrauliques ou le servomoteur électrique afin de
a. déplacer la broche centrale (40) vers sa position d'extrémité avant avant d'initier le remplissage de la cavité de moule (25)
b. rétracter la broche centrale (40) de sa position d'extrémité avant vers sa position d'extrémité arrière après que le remplissage a été initié pendant que la cavité de moule (25) est en cours de remplissage;
c. positionner la broche centrale (40) dans sa position d'extrémité arrière avant l'achèvement du remplissage.

13. Procédé selon l'une quelconque des revendications 8 à 12, dans lequel un capteur est connecté à l'unité de commande pour surveiller la vitesse de la broche centrale (40).
